# EUROPEAN PATENT APPLICATION

(11) **EP 3 605 443 A1**
(43) Date of publication of application: **05.02.2020**
(21) Application number: 18776055.8
(22) Date of filing: 17.01.2018
(51) Int. Cl.: G06Q 50/20, G09B 19/00

(54) **INFORMATION PROCESSING DEVICE AND INFORMATION PROCESSING METHOD**

(30) Priority: 30.03.2017 JP 2017067143
(71) Applicant: Sony Corporation, Tokyo 108-0075 (JP)
(72) Inventor: LAWRENSON, Matthew, Lausanne 1015 (CH); WALKER, Nicholas, London SE19 3HF (GB); ISOZU, Masaaki, Tokyo 141-0031 (JP)
(74) Representative: MFG Patentanwälte Meyer-Wildhagen Meggle-Freund Gerhard PartG mbB
(86) International application number: PCT/JP2018/001147
(87) International publication number: WO 2018/179690

(57) **Abstract**

There is provided an information processing apparatus including a processor that certifies, on the basis of evaluation target data created by a user and a predetermined condition, a first unit indicating experience of the user.

## Description

### TECHNICAL FIELD

The present disclosure relates to an information processing apparatus, and a method for processing information.

### BACKGROUND ART

In general, a learner attends school or a public institution equivalent to the school, and obtains a learning unit on the basis of a curriculum or a syllabus defined by the institution. For example, the learner participates in a 10-hour lecture, and then takes an examination, thereby obtaining a learning unit on the basis of the score of the examination.

Such a learning unit is used to prove that a person has a certain degree of knowledge. However, there may be a case where the ability to perform knowledge-based practice (e.g., system development, public documentation, etc.) is emphasize rather than having knowledge.

Patent Document 1 discloses a system for performing evaluation based on practical experience on the basis of the background mentioned above. In the system disclosed in Patent Document 1, evaluation is performed using a checklist in social experience, such as an internship.

### CITATION LIST

### PATENT DOCUMENT

Patent Document 1: US Patent Application Laid-Open No. 2013/0273517

### SUMMARY OF THE INVENTION

### PROBLEMS TO BE SOLVED BY THE INVENTION

However, while evaluation in a special situation, such as an internship, is disclosed, Patent Document 1 fails to disclose evaluation based on general social experience or practical experience (e.g., system development, public documentation, etc.).

In view of the above, the present disclosure proposes an information processing apparatus and a method for processing information capable of evaluating experience of a user.

### SOLUTIONS TO PROBLEMS

According to the present disclosure, there is provided an information processing apparatus including a processor that certifies, on the basis of evaluation target data created by a user and a predetermined condition, a first unit indicating experience of the user.

Furthermore, according to the present disclosure, there is provided a method for processing information that causes a computer to certify, on the basis of evaluation target data created by a user and a predetermined condition, a first unit indicating experience of the user.

### EFFECTS OF THE INVENTION

According to the present disclosure, user experience is evaluated.

Note that the effect described above is not necessarily limited, and any of the effects described in the present specification or another effect that can be understood from the present specification may be exerted in addition to the effect described above or instead of the effect described above.

### BRIEF DESCRIPTION OF DRAWINGS

Fig. 1 is a diagram schematically illustrating a blockchain system according to an embodiment of the present disclosure.
Fig. 2 is another diagram schematically illustrating the blockchain system according to the embodiment of the present disclosure.
Fig. 3 is still another diagram schematically illustrating the blockchain system according to the embodiment of the present disclosure.
Fig. 4 is a diagram schematically illustrating a configuration of an information management system according to the embodiment of the present disclosure.
Fig. 5 is a block diagram illustrating an exemplary functional configuration of a user device according to the embodiment of the present disclosure.
Fig. 6 is a block diagram illustrating an exemplary functional configuration of a server according to the embodiment of the present disclosure.
Fig. 7 is a flowchart illustrating an exemplary method for processing information according to the embodiment of the present disclosure.
Fig. 8 is a table illustrating exemplary information managed by the blockchain system according to the embodiment of the present disclosure.
Fig. 9 is a table illustrating another example of the information managed by the blockchain system according to the embodiment of the present disclosure.
Fig. 10 is a block diagram illustrating another exemplary functional configuration of the server according to the embodiment of the present disclosure.
Fig. 11 is a diagram illustrating an exemplary chart created in the information management system according to the embodiment of the present disclosure.
Fig. 12 is a diagram illustrating another exemplary chart created in the information management system according to the embodiment of the present disclosure.
Fig. 13 is a diagram illustrating still another exemplary chart created in the information management system according to the embodiment of the present disclosure.
Fig. 14 is a diagram illustrating an exemplary hardware configuration of the server according to the embodiment of the present disclosure.

### MODE FOR CARRYING OUT THE INVENTION

Hereinafter, a preferred embodiment of the present disclosure will be described in detail with reference to the accompanying drawings. Note that, in the present specification and the drawings, constituent elements having substantially the same functional configuration will be denoted by the same reference signs, and duplicate descriptions thereof will be omitted.

Note that descriptions will be given in the following order.
0. Overview of Peer-to-Peer Database
1. Overview of Information Management System
2. Configuration of Devices Included in Information Management System
3. Method for Processing Information in Information Management System
4. Experience Unit Data Registered in P2P Database
5. Visualization of Experience Unit Data
6. Hardware Configuration of Server
7. Supplementary Items
8. Conclusion

### <0. Overview of Peer-to-Peer Database>

A learning management system according to the present embodiment uses a distributed peer-to-peer database distributed in a peer-to-peer network. Note that the peer-to-peer network may be called a peer-to-peer distributed file system. Hereinafter, the peer-to-peer network may be referred to as a "P2P network", and the peer-to-peer database may be referred to as a "P2P database". As an example of the P2P database, blockchain data distributed in the P2P network may be used. In view of the above, a blockchain system will be described first.

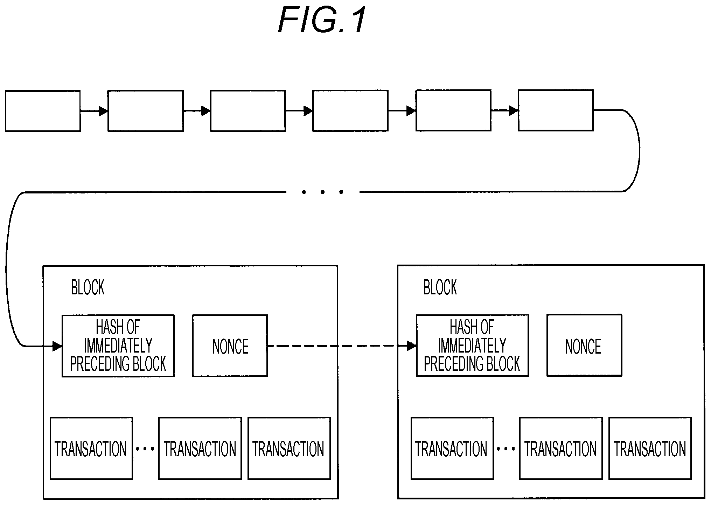

As illustrated in Fig. 1, blockchain data according to the present embodiment is data including a plurality of blocks continuously arranged in chains. One or more target data can be stored in each block as a transaction.

Examples of the blockchain data according to the present embodiment include blockchain data used for exchange of data of virtual currency, such as Bitcoin. The blockchain data used for exchange of data of virtual currency includes, for example, a hash of the immediately preceding block, and a special value called a nonce. The hash of the immediately preceding block is used to determine whether or not it is a "correct block" in a correct sequence from the immediately preceding block. A nonce is used to prevent impersonation in authentication using a hash, and tampering is prevented by using the nonce. Examples of the nonce include data indicating a character string, a numerical string, or a combination thereof.

Furthermore, in the blockchain data, data of each transaction is subject to application of an electronic signature using an encryption key, or is encrypted using an encryption key. Furthermore, data of each transaction is published and shared across the entire P2P network. Note that, depending on the blockchain system, the same record may not necessarily be held in the entire P2P network.

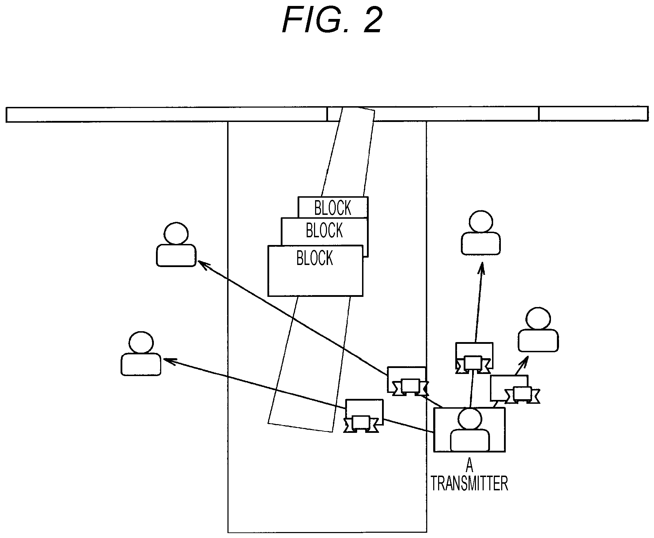

Fig. 2 is a diagram illustrating how target data is registered by a user A in the blockchain system. The user A electronically signs the target data to be registered in the blockchain data using a private key of the user A. Then, the user A broadcasts the transaction including the electronically signed target data on the network. This ensures that the owner of the target data is the user A.

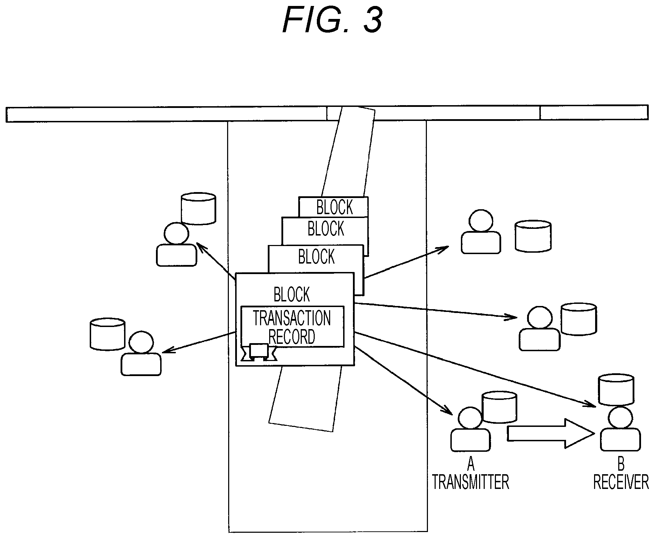

Fig. 3 is a diagram illustrating how the target data is migrated from the user A to a user B in the blockchain system. The user A electronically signs the transaction using the private key of the user A, and includes a public key of the user B in the transaction. This indicates that the target data has been migrated from the user A to the user B. Furthermore, upon the transaction of the target data, the user B may obtain a public key of the user A from the user A, and may obtain the electronically signed or encrypted target data.

Furthermore, in the blockchain system, by using a side chain technique, for example, it is possible to include, in the blockchain data used to exchange data of existing virtual currency such as the blockchain data of Bitcoin, other target data different from the virtual currency. Here, the other target data different from the virtual currency in the present embodiment is data of an experience unit (first unit) or a learning unit (second unit) to be described later.

In this manner, with the blockchain data being used to manage the data of the learning unit or the experience unit, the learning unit or the experience unit is held on the network without being tampered. Furthermore, with the blockchain data being used, a third party who wishes to use the information included in the blockchain can access the information included in the blockchain on the basis of predetermined authority. Note that the data of the learning unit or the experience unit to be managed in the present embodiment will be described later.

### <1. Overview of Information Management System>

The foregoing has described the blockchain system, which is an example of the P2P database used in the information management system according to the embodiment of the present disclosure. Hereinafter, an overview of the information management system according to the embodiment of the present disclosure will be described.

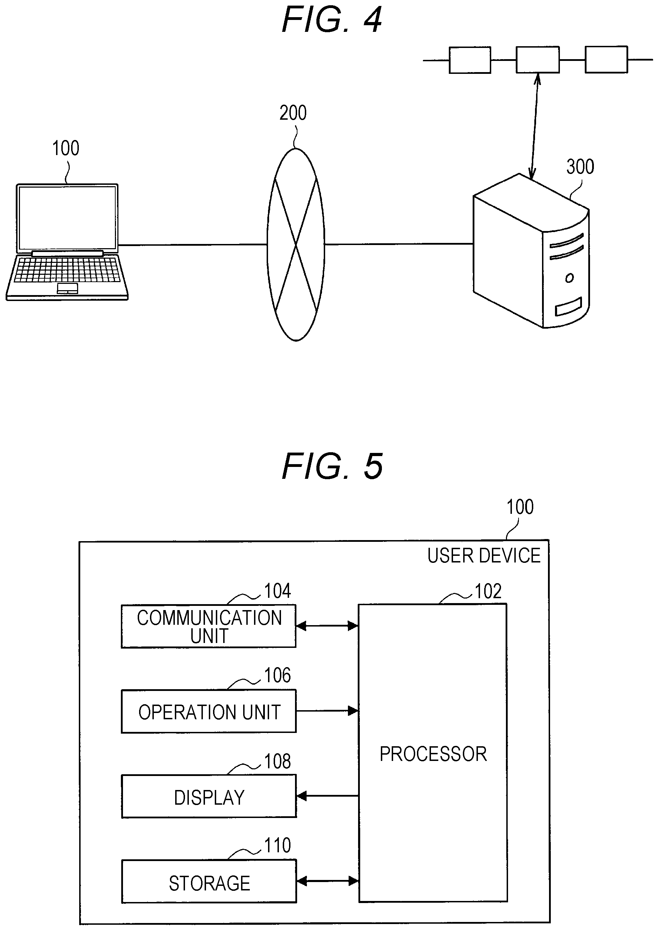

Fig. 4 is a diagram illustrating a configuration of the information management system according to the present embodiment. The information management system according to the present embodiment manages a learning unit certified on the basis of learning at a predetermined institution such as a school, and an experience unit certified on the basis of social experience or practical experience of a user.

The learning unit is a unit certified on the basis of learning based on a curriculum, a syllabus, or the like defined by a school or the like. A topic may be associated with the learning unit according to learning content of the learning unit. For example, in a case where the learning unit is a unit related to programming, a topic to be associated with the learning unit may be a type of a programming language. Specifically, the topic may be hypertext markup language (HTML), wireless markup language (WML), Java (registered trademark), C language, extensible markup language (XML), or the like.

Furthermore, in a case where the learning unit is a unit related to wireless communication, a topic to be associated with the learning unit may be a communication scheme of wireless communication. Specifically, the topic may be global system for mobile communications (GSM) (registered trademark), general packet radio service (GPRS), wideband code division multiple access (W-CDMA), long term evolution (LTE), or the like.

Note that the type or category of the learning unit and the type or category of the topic are obviously not limited to the examples mentioned above. For example, in a case where the learning unit is civil law, the topic may be a proprietary right, a mortgage, a claim, succession, or a tort.

The experience unit is a unit certified on the basis of social experience or practical experience of the user having the learning unit. For example, in a case where a user having a learning unit of programming creates an application using Java, an experience unit is certified on the basis of the application creation experience of the user. Specifically, the experience unit is certified by the created application being evaluated. At this time, the topic may be Java.

Furthermore, in a case where a user having a learning unit of wireless communication creates a proposal regarding LTE, an experience unit is certified on the basis of the proposal creation experience of the user. Specifically, the experience unit is certified by the created proposal being evaluated. At this time, the topic may be LTE.

Furthermore, in a case where a user having a learning unit of civil law creates a will, an experience unit is certified on the basis of the will creation experience of the user. Specifically, the experience unit is certified by the created will being evaluated. At this time, the topic may be succession.

Hereinafter, a configuration of the information management system according to the present embodiment will be described. The information management system according to the present embodiment includes a user device 100, a network 200, and a server 300. Note that the user device 100 and the server 300 are an example of an information processing apparatus that executes information processing according to the present embodiment.

The user device 100 is a device to be used by the user. For example, the user uses the user device 100 to develop an application. Furthermore, the user uses the user device 100 to create a document. Then, the user uses the user device 100 to transmit evaluation target data for requesting evaluation to the server 300. Here, the evaluation target data may be, for example, data of the application created by the user, or may be data of the document created by the user. Note that the user device 100 may automatically transmit the evaluation target data to the server 300 every predetermined period of time regardless of operation made by the user.

The server 300 evaluates the evaluation target data received from the user device 100. For example, the server 300 analyzes the evaluation target data using a vector space model. Then, the server 300 determines whether or not the evaluation target data satisfies a predetermined condition. For example, the server 300 may evaluate whether or not the evaluation target data satisfies the predetermined condition by comparing the evaluation target data with predetermined data using the vector space model.

Note that the server 300 may include a database that stores predetermined information for determining the predetermined condition. Furthermore, the server 300 may obtain the predetermined information for determining the predetermined condition from another device. Furthermore, the server 300 may obtain the predetermined information for determining the predetermined condition from a blockchain, which is an example of the P2P database.

In a case where the evaluation target data is determined to satisfy the predetermined condition, the server 300 certifies the experience unit. Then, the server 300 registers the certified experience unit data in the blockchain. Note that a method for processing information for certifying the experience unit and the experience unit data to be registered in the blockchain will be described later.

In this manner, the experience unit data is evaluated and managed, whereby information associated with knowledge based on social experience or practical experience of the user is managed. Furthermore, in an information processing system according to the present embodiment, data of the learning unit or the experience unit is held on the network without being tampered. Furthermore, a third party who wishes to use the information included in the blockchain can access the information included in the blockchain on the basis of predetermined authority.

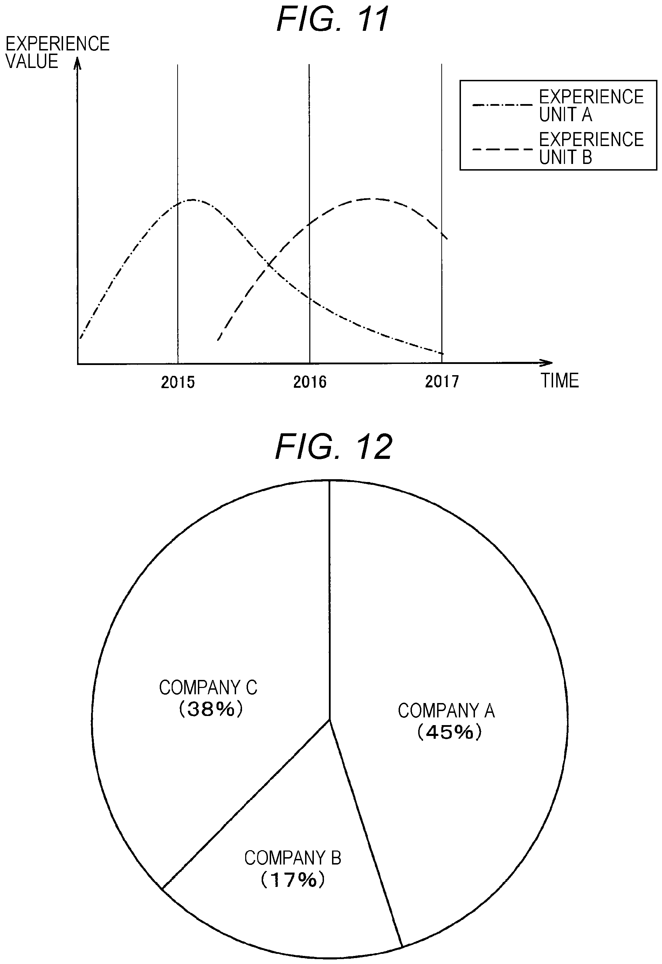

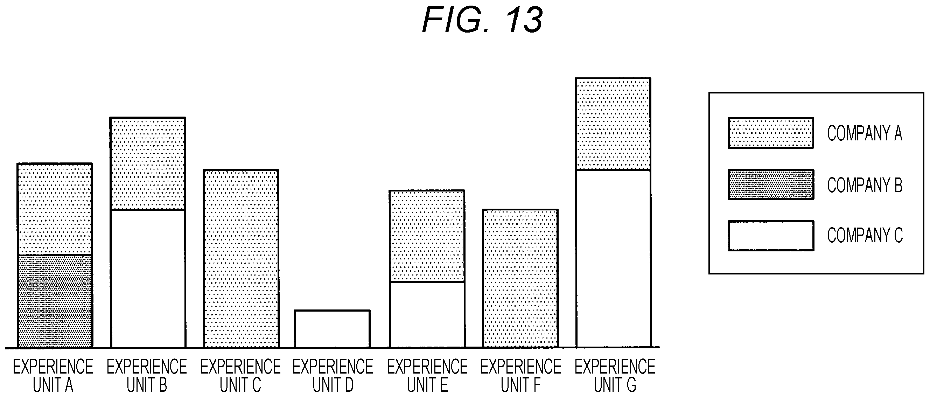

Furthermore, in the information management system according to the present embodiment, experience of the user is visualized on the basis of experience unit data. Specifically, a chart is created on the basis of the experience unit data. For example, as will be described later with reference to Fig. 11, a chart representing temporal changes in an experience value included in the experience unit data may be created. Furthermore, as will be described later with reference to Fig. 12, a chart representing an institution or an organization involved in obtaining the experience unit of the user may be created. Furthermore, as will be described later with reference to Fig. 13, a chart representing at which institution or organization each experience unit of the user has been obtained may be created. As described above, in the information management system according to the present embodiment, experience of the user is visualized on the basis of experience unit data, whereby a third party can easily understand what type of experience at what type of institution or organization the user has experienced.

### <2. Configuration of Devices Included in Information Management System>

The foregoing has described the overview of the information management system according to the embodiment of the present disclosure. Hereinafter, configurations of devices included in the information management system according to the embodiment of the present disclosure will be described.

### (2-1. Configuration of User Device 100)

Fig. 5 is a diagram illustrating an exemplary configuration of the user device 100 according to the present embodiment. The user device 100 includes, for example, a processor 102, a communication unit 104, an operation unit 106, a display 108, and a storage 110.

The processor 102 processes signals from each component of the user device 100. For example, the processor 102 decodes the signals transmitted from the communication unit 104, and extracts data. In addition, the processor 102 may process signals from the operation unit 106 to issue an instruction directed to an application to be executed in the processor 102. In addition, the processor 102 may also read data from the storage 110 to perform processing on the read data.

The communication unit 104 is a communication unit for connecting the user device 100 and an external network by wired communication or wireless communication. For example, the communication unit 104 may perform communication using a communication scheme in conformity with Ethernet (registered trademark). Furthermore, the communication unit 104 may perform communication using, for example, a communication scheme defined by the third generation partnership project (3GPP) or 3GPP2. Furthermore, the communication unit 104 may perform communication using a communication scheme such as W-CDMA, LTE, and CDMA2000. Furthermore, the communication unit 104 may transmit evaluation target data to the server 300 via the network 200. Note that the communication schemes mentioned above are examples, and the communication scheme of the communication unit 104 is not limited thereto.

The operation unit 106 receives operation on the user device 100 made by the user. The user operates the operation unit 106 to operate the application executed by the user device 100, for example. In addition, the user operates the operation unit 106 to set various functions of the user device 100.

The display 108 is used to display an image. For example, the display 108 displays an image associated with the application executed by the user device 100. The storage 110 stores programs, such as an application to be executed by the user device 100, and an operating system. Further, the storage 110 may store evaluation target data created by the user. For example, the storage 110 may store a program created by the user, or may store text data related to a document created by the user.

### (2-2. Configuration of Server 300)

The foregoing has described the configuration of the user device 100 according to the embodiment of the present disclosure. Hereinafter, a configuration of the server 300 according to the embodiment of the present disclosure will be described.

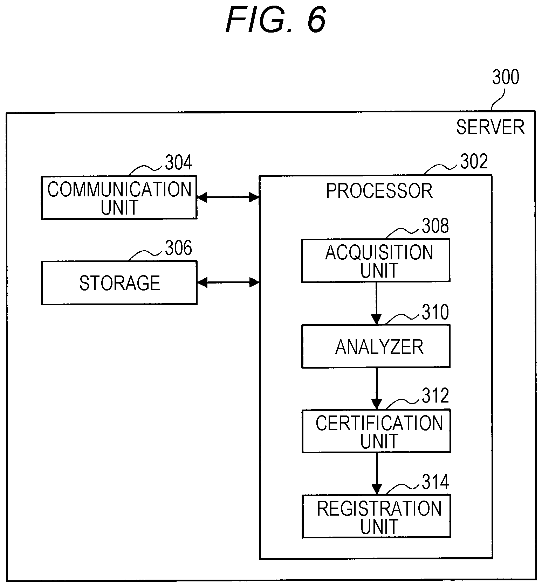

Fig. 6 is a diagram illustrating an exemplary configuration of the server 300 capable of performing a process according to a method for processing information of the present embodiment. The server 300 includes, for example, a processor 302, a communication unit 304, and a storage 306. Furthermore, the processor 302 includes an acquisition unit 308, an analyzer 310, a certification unit 312, and a registration unit 314.

The processor 302 processes signals from each component of the server 300. For example, the processor 302 decodes the signals transmitted from the communication unit 304, and extracts data. In addition, the processor 302 reads data from the storage 306 to perform processing on the read data.

The communication unit 304 is a communication unit that communicates with an external device by wired communication or wireless communication, which may perform communication using, for example, a communication scheme in conformity with Ethernet (registered trademark). The storage 306 stores various kinds of data used by the processor 302. For example, the storage 306 may store a database used to certify an experience unit.

The acquisition unit 308 obtains various kinds of data via the communication unit 304. For example, the acquisition unit 308 obtains evaluation target data from the user device 100. Furthermore, the acquisition unit 308 obtains predetermined information for evaluating the experience unit from another device or another system. For example, the acquisition unit 308 may obtain data of the learning unit owned by the user from the blockchain data. Furthermore, the acquisition unit 308 may obtain data of the experience unit owned by the user from the blockchain data. Note that the acquisition unit 308 may obtain the information described above at the time of receiving the evaluation target data from the user device 100.

The analyzer 310 analyzes the evaluation target data obtained by the acquisition unit 308. For example, the analyzer 310 analyzes the evaluation target data using the vector space model. The vector space model represents text data as vector data using the frequency of occurrence, the occurrence rate of words, or the like included in the text data.

The certification unit 312 evaluates the evaluation target data obtained from the user device 100 on the basis of a predetermined condition. For example, the certification unit 312 may evaluate the similarity between a plurality of text data by comparing the plurality of text data represented as vector data based on the vector space model. The certification unit 312 may evaluate relevance to a topic, novelty, quality, and the like of the evaluation target data obtained from the user device 100 on the basis of such processing of performing evaluation. Then, the certification unit 312 certifies the experience unit on the basis of the evaluation.

The registration unit 314 registers the certified experience unit data in the blockchain data that is an example of the P2P database. The experience unit data includes, for example, any one of topic data, data of a user experience value, and data of an institution or organization involved in obtaining the experience unit.

### <3. Method for Processing Information in Information Management System>

The foregoing has described the configuration of each of the devices included in the information management system according to the embodiment of the present disclosure. Hereinafter, a method for processing information in the information management system according to the embodiment of the present disclosure will be described.

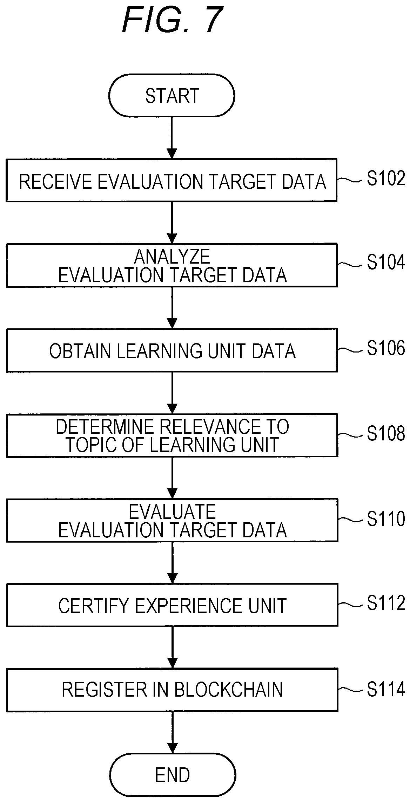

Fig. 7 is a flowchart illustrating an exemplary method for processing information to be executed in the information management system according to the present embodiment. In particular, in Fig. 7, a method for processing information related to certification of the experience unit to be executed in the server 300 is described.

In S102, the user transmits created evaluation target data to the server 300, and the server 300 receives the evaluation target data. Here, as described above, the evaluation target data may be data related to a program or a document created by the user. Note that, at this time, the user may electronically sign the evaluation target data. In this manner, an electronic signature is made by the user, thereby confirming the creation entity of the evaluation target data. Furthermore, an organization involved in the creation of the evaluation target data (e.g., company to which the user belongs) may electronically sign the evaluation target data. In this manner, an electronic signature is made by the organization, thereby confirming the organization involved in the creation of the evaluation target data. Note that it is obviously optional that the user may transmit the identification information for identifying the user and the identification information for identifying the organization involved in the creation of the evaluation target data to the server 300 without making an electronic signature.

Next, in S104, the analyzer 310 analyzes the evaluation target data obtained from the user device 100. For example, the analyzer 310 converts the text data of the obtained evaluation target data into vector data using the vector space model.

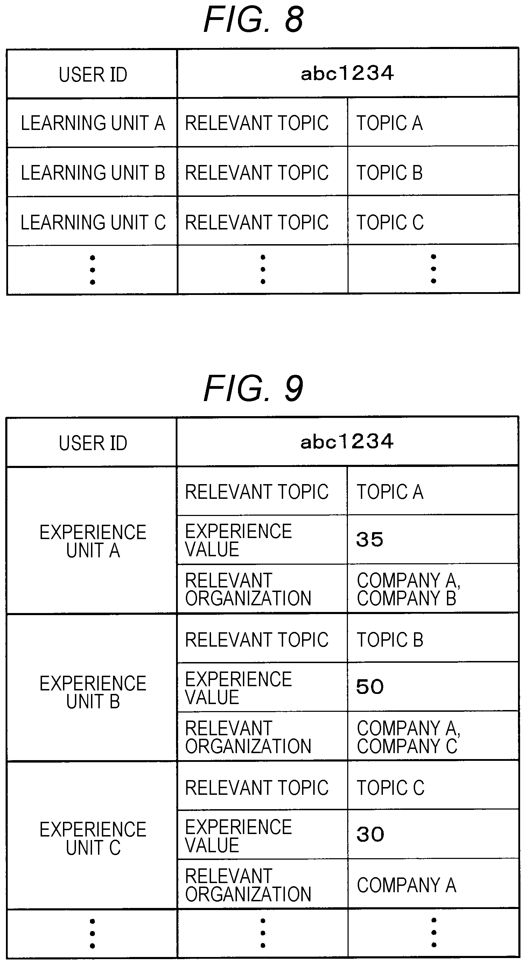

Next, in S106, the acquisition unit 308 obtains data of the learning unit owned by the user to use it for evaluation of the evaluation target data. Here, as illustrated in Fig. 8, the learning unit data to be obtained may include a user ID, a type of the learning unit owned by the user, and a type of a topic related to the learning unit. Note that, in Fig. 8, a learning unit and a related topic are in a one-to-one relationship. However, the learning unit and the topic may not be in the one-to-one relationship. That is, a learning unit may be related to a plurality of topics, and a topic may be related to a plurality of learning units.

Returning to Fig. 7, in S108, the certification unit 312 determines whether or not the obtained evaluation target data has relevance to the topic of the learning unit as a predetermined condition for allowing the experience unit to be certified. For example, in a case where the topic is Java, the certification unit 312 determines whether or not the obtained evaluation target data is related to Java using the vector data described above. Furthermore, in a case where the topic is LTE, the certification unit 312 determines whether or not the obtained evaluation target data is related to LTE using the vector data described above.

Next, in S110, the certification unit 312 evaluates the obtained evaluation target data. For example, the certification unit 312 may evaluate the novelty, the quality, and the like of the obtained evaluation target data as a predetermined condition for allowing the experience unit to be certified.

Specifically, the certification unit 312 may store, in the storage 306, a database for storing the data of the learning unit acquired by the user and data previously created by the user to evaluate the novelty, the quality, and the like of the obtained evaluation target data. For example, the learning unit data may be data related to a textbook used by the user to acquire the learning unit. That is, the learning unit data may be data related to a textbook designated by a curriculum, a syllabus, or the like defined by a predetermined organization such as a school. Furthermore, the data previously created by the user may be data such as a program or a document previously created by the user. Note that the data to be compared with the evaluation target data to evaluate the novelty, the quality, and the like of the obtained evaluation target data may be referred to as evaluation criterion data hereinafter.

The certification unit 312 uses the evaluation criterion data stored in the database to determine whether or not the obtained evaluation target data has novelty with respect to the evaluation target data. That is, the certification unit 312 determines whether or not the user has created novel content in the obtained evaluation target data.

Specifically, the certification unit 312 compares the obtained evaluation target data with the evaluation criterion data. Here, the certification unit 312 may compare the obtained evaluation target data with the evaluation criterion data using the vector space model described above.

Furthermore, in S110, the certification unit 312 may evaluate the quality of the evaluation target data. At this time, the certification unit 312 may determine the volume (e.g., data volume, the number of characters) of the evaluation target data as the quality of the evaluation target data. Furthermore, sample data to serve as a sample satisfying predetermined criteria may be stored in the database as the evaluation criterion data. For example, the sample data may be data created by another user having experience that satisfies the predetermined criteria. The certification unit 312 may determine the quality of the evaluation target data by determining the similarity between such sample data satisfying the predetermined criteria and the evaluation target data.

Note that the novelty of the evaluation target data, the quality of the evaluation target data, and the relevance to the topic under the predetermined condition as described above may be represented by numerical values calculated using predetermined algorithm. In a case where the relevance to the topic, the novelty of the evaluation target data, and the quality of the evaluation target data are represented by numerical values calculated using the predetermined algorithm, the predetermined condition for certifying the experience unit may be that the sum of values of the relevance to the topic, the novelty of the evaluation target data, and the quality of the evaluation target data is equal to or more than a predetermined threshold value. Furthermore, the predetermined condition may be that the sum of two values among the relevance to the topic, the novelty of the evaluation target data, and the quality of the evaluation target data is equal to or more than the predetermined threshold value. Furthermore, the predetermined condition may be that each value of the relevance to the topic, the novelty of the evaluation target data, and the quality of the evaluation target data is equal to or more than the predetermined threshold value.

Furthermore, the predetermined condition mentioned above may be that the evaluation target data obtained in S102 is electronically signed by the user and the organization involved in the creation of the evaluation target data. The evaluation target data is evaluated on the basis of such conditions, whereby the experience of the user is evaluated on the basis of the evaluation target data that is less likely to be tampered. Therefore, credibility of the certified experience unit is improved.

In S108 and S110, in a case where the certification unit 312 determines that the obtained evaluation target data satisfies the predetermined condition, the process proceeds to S112. In S112, the certification unit 312 certifies the experience unit for the user. Then, in S114, the certification unit 312 registers data of the experience unit certified in S112 in the blockchain.

### <4. Experience Unit Data Registered in P2P Database>

The foregoing has described the exemplary method for processing information for certifying the experience unit. Hereinafter, exemplary experience unit data to be registered in a blockchain, which is an example of the P2P database, will be described.

Fig. 9 is a table illustrating exemplary experience unit data to be registered in the blockchain. In the information management system according to the present embodiment, experience unit data as illustrated in Fig. 9 is registered in place of transaction information of an existing blockchain such as Bitcoin, or in association with transaction information of an existing blockchain such as Bitcoin.

As illustrated in Fig. 9, in the information management system according to the present embodiment, for example, a user ID, an obtained experience unit, a topic related to the experience unit, an experience value obtained on the basis of certification of the experience unit, and data of a relative organization may be registered in the blockchain.

Here, the type of the experience unit may correspond to the type of the learning unit described above. That is, the type of the experience unit may be, for example, programming, or wireless communication. Furthermore, the topic related to the experience unit may correspond to the topic of the learning unit. That is, in a case where the experience unit is a unit related to programming, a topic related to the experience unit may be a type of a programming language. Specifically, the relative topic may be HTML, WML, Java, C language, XML, or the like.

Furthermore, in a case where the experience unit is a unit related to wireless communication, a topic related to the experience unit may be a communication scheme of wireless communication. Specifically, the relative topic may be GSM, GPRS, W-CDMA, LTE, or the like. Note that the type or category of the experience unit and the type or category of the topic are obviously not limited to the examples mentioned above.

The experience value obtained on the basis of certification of the experience unit may be given to the user each time one experience unit is certified, for example. For example, the experience value of 10 may be given to the user at the time when one experience unit is certified. Note that the experience value is an example, and is not limited thereto. For example, the experience value may be replaced with the number of units. That is, it is sufficient if the experience value is data related to a numerical value given on the basis of certification of the experience unit.

Furthermore, the experience value corresponding to the quality of the evaluation target data evaluated in S110 of Fig. 7 may be given to the user. For example, as the volume of the evaluation target data (e.g., data volume, the number of characters) increases, the experience value to be given may increase. Furthermore, as the similarity between the evaluation target data and the sample data becomes higher, the experience value to be given may increase. Furthermore, in a case where the novelty of the evaluation target data is represented by a numerical value, the experience value to be given may increase as the numerical value of the novelty becomes larger. Note that the experience value may decrease as time passes, as will be described later.

The relative organization indicates an organization involved in obtaining the experience unit. For example, the relative organization may be an organization to which the user belongs at the time of creating the evaluation target data. Furthermore, the relative organization may be organization that has electronically signed the evaluation target data as described above.

In this manner, the experience unit data is managed, whereby it becomes possible to manage what type of experience at what type of institution or organization the user has experienced. Furthermore, the experience unit data is managed by the blockchain data, whereby the experience of the user is managed in the state in which the information is not tampered and a third party can easily use the information.

### <5. Visualization of Experience Unit Data>

The foregoing has described the experience unit data managed in the blockchain that is an example of the P2P database in the information management system according to the present embodiment. Hereinafter, visualization of the experience unit data to be executed in the information management system according to the present embodiment will be described. Note that, in the present specification, visualization of data includes both of or either of creating a graph as illustrated in Figs. 11 to 13 and creating original data of the graph.

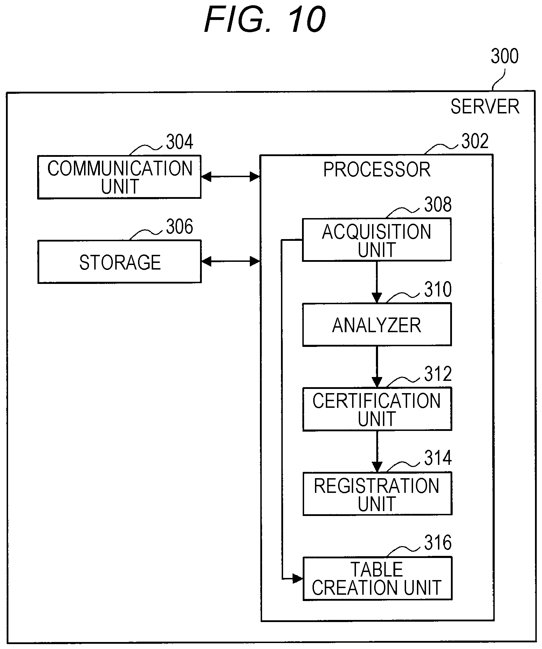

The visualization of the experience unit data described above may be performed by, for example, the server 300. Fig. 10 is a block diagram illustrating a functional configuration of the server 300 that visualizes the experience unit data. The functional block diagram illustrated in Fig. 10 is different from the functional block diagram illustrated in Fig. 6 in that the server 300 illustrated in Fig. 10 includes a table creation unit 316.

The table creation unit 316 visualizes the experience unit data on the basis of the experience unit data obtained by the acquisition unit 308 from the blockchain. Specifically, the table creation unit 316 creates a table on the basis of the experience unit data. For example, the table creation unit 316 creates data for creating charts as illustrated in Figs. 11 to 13.

Fig. 11 is a diagram illustrating exemplary data of a chart created by the table creation unit 316. The chart illustrated in Fig. 11 is a chart illustrating temporal changes in the experience value owned by the user in each experience unit. In Fig. 11, it is indicated that experience values related to an experience unit A have been acquired by 2015, and have decreased thereafter. Furthermore, in Fig. 11, it is indicated that experience values related to an experience unit B have been acquired from 2015 to about the middle of 2016, and have decreased thereafter. In this manner, a chart representing temporal changes in the experience value owned by the user in each experience unit is created, whereby a third party can properly understand when and what type of experience the user has experienced. Furthermore, such a chart is created on the basis of information managed by the blockchain, whereby reliability of the chart can be enhanced.

Note that, in the present embodiment, the experience value owned by the user may decrease as time passes, as described above. The reason why the decrease in the experience value is set in such a manner is that humans forget knowledge as time passes. Here, a manner of the decrease in the experience value may be set in any way. For example, the decrease in the experience value may be set such that a certain experience value decreases as a certain period of time elapses. Specifically, the decrease in the experience value may be set such that the experience value decreases by five each time one month passes. Furthermore, the decrease in the experience value may be set to correspond to the human forgetting curve. With this arrangement, the user experience value can be more properly understood by a third party.

Furthermore, the table creation unit 316 may create data of a chart as illustrated in Fig. 12. The chart illustrated in Fig. 12 is a chart illustrating a relationship between the experience value owned by the user and a relative organization (in Fig. 12, company) of the experience unit. For example, the chart of Fig. 12 is assumed to indicate at which organization the experience value owned by the user has been acquired. Fig. 12 illustrates that 45% of the user experience value is acquired at a company A, 17% of the user experience value is acquired at a company B, and 38% of the user experience is acquired at a company C. In this manner, a chart representing at which organization the experience value owned by the user has been acquired is created, whereby a third party can properly understand what type of experience at what type of organization the user has experienced. Furthermore, such a chart is created on the basis of information managed by the blockchain, whereby reliability of the chart can be enhanced.

Furthermore, the table creation unit 316 may create data of a chart as illustrated in Fig. 13. The chart illustrated in Fig. 13 is a chart illustrating, for each experience unit, a relationship between the experience value owned by the user and a relative organization (in Fig. 13, company) of the experience unit. Specifically, it is a chart illustrating at which organization the experience value of each experience unit owned by the user has been acquired.

Fig. 13 illustrates that an experience unit A is acquired at the company A and the company B. Furthermore, it is illustrated that an experience unit B, an experience unit E, and an experience unit G are acquired at the company A and the company C. Furthermore, it is illustrated that an experience unit C and an experience unit F are acquired at the company A. It is illustrated that an experience unit D is obtained at the company C.

In this manner, a chart representing, for each experience unit, at which organization the experience value owned by the user has been acquired is created, whereby a third party can understand in more detail what type of experience at what type of organization the user has experienced. Furthermore, such a chart is created on the basis of information managed by the blockchain, whereby reliability of the chart can be enhanced.

Note that the experience unit data is obtained from the blockchain in the example described above. However, the experience unit data may be stored in the storage 306. Then, the acquisition unit 308 may obtain the experience unit data from the storage 306.

### <6. Hardware Configuration of Server>

The foregoing has described the information management system and the method for processing information executed in the information management system according to the present embodiment. Hereinafter, a hardware configuration of the server 300 in the information management system will be described.

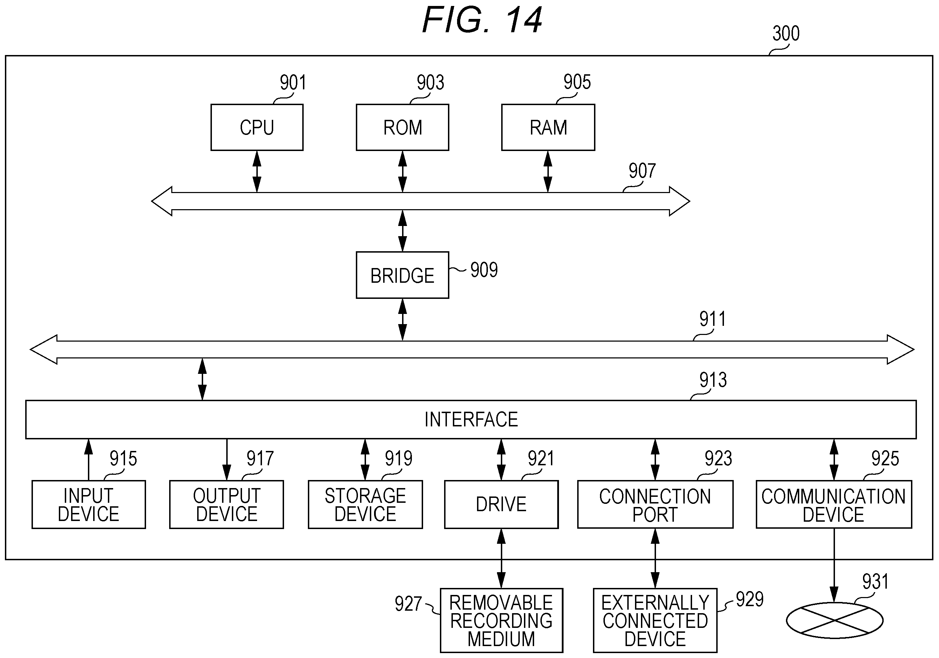

Hereinafter, a hardware configuration of the server 300 according to the embodiment of the present disclosure will be described in detail with reference to Fig. 14. Fig. 14 is a block diagram for illustrating the hardware configuration of the server 300 according to the embodiment of the present disclosure.

The server 300 mainly includes a CPU 901, a ROM 903, and a RAM 905. Moreover, the server 300 further includes a host bus 907, a bridge 909, an external bus 911, an interface 913, an input device 915, an output device 917, a storage device 919, a drive 921, a connection port 923, and a communication device 925.

The CPU 901 functions as a main processing unit and a control unit, and controls overall operation in the server 300 or a part thereof in accordance with various programs recorded in the ROM 903, the RAM 905, the storage device 919, or a removable recording medium 927. Note that the CPU 901 may have the function of the processor 302. Furthermore, the CPU 901 may configure each of the acquisition unit 308, the analyzer 310, the certification unit 312, the registration unit 314, and the table creation unit 316. The ROM 903 stores programs to be used by the CPU 901, operation parameters, and the like. The RAM 905 primarily stores programs to be used by the CPU 901, parameters that appropriately change in the execution of the programs, and the like. These are mutually connected by the host bus 907 including an internal bus such as a CPU bus.

The input device 915 is an operation means operated by the user, such as a mouse, a keyboard, a touch panel, a button, a switch, and a lever, for example. In addition, the input device 915 includes, for example, an input control circuit or the like that generates input signals on the basis of information input by the user using the operation means mentioned above, and outputs the signals to the CPU 901. The user can input various kinds of data or provide an instruction for processing operation to the server 300 by operating the input device 915.

The output device 917 includes a device capable of visually or aurally notifying the user of the obtained information. Examples of such a device include a display device, such as a CRT display device, a liquid crystal display device, a plasma display device, an EL display device, and a lamp, an audio output device, such as a speaker and a headphone, a printer, a mobile phone, a facsimile, and the like. The output device 917 outputs, for example, results obtained through various kinds of processing performed by the server 300. specifically, the display device displays the results obtained through various kinds of processing performed by the server 300 as text or images. Meanwhile, the audio output device converts audio signals including reproduced audio data, sound data, and the like into analog signals, and outputs them.

The storage device 919 is a device for storing data, which is an example of the storage 306 of the server 300. The storage device 919 includes, for example, a magnetic storage device such as a hard disk drive (HDD), a semiconductor storage device, an optical storage device, a magneto-optical storage device, or the like. The storage device 919 stores programs to be executed by the CPU 901, various kinds of data, various kinds of data obtained from the outside, and the like. Note that the storage device 919 may have the function of the storage 306.

The drive 921 is a reader/writer for a recording medium, which is incorporated in or externally attached to the server 300. The drive 921 reads out information recorded in the attached removable recording medium 927, such as a magnetic disk, an optical disk, a magneto-optical disk, or a semiconductor memory, and outputs the information to the RAM 905. Furthermore, the drive 921 is also capable of writing a record in the attached removable recording medium 927, such as a magnetic disk, an optical disk, a magneto-optical disk, or a semiconductor memory. The removable recording medium 927 is, for example, a DVD medium, an HD-DVD medium, a Blu-ray (registered trademark) medium, or the like. Furthermore, the removable recording medium 927 may be a CompactFlash (CF) (registered trademark), a flash memory, a secure digital (SD) memory card, or the like. Furthermore, the removable recording medium 927 may be, for example, an integrated circuit (IC) card mounting a contactless IC chip, an electronic device, or the like.

The connection port 923 is a port for directly connecting a device to the server 300. Examples of the connection port 923 include a universal serial bus (USB) port, an IEEE 1394 port, a small computer system interface (SCSI) port, and the like. Other examples of the connection port 923 include an RS-232C port, an optical audio terminal, a high-definition multimedia interface (HDMI) (registered trademark) port, and the like. By connecting an externally connected device 929 to the connection port 923, the server 300 directly obtains various kinds of data from the externally connected device 929, or provides various kinds of data to the externally connected device 929.

The communication device 925 is, for example, a communication interface including a communication device or the like for connecting to a communication network 931. The communication device 925 is, for example, a communication card for wireless USB (WUSB), a wired or wireless local area network (LAN), or the like. Furthermore, the communication device 925 may be a router for optical communication, a router for asymmetric digital subscriber line (ADSL), a modem for various kinds of communication, or the like. For example, the communication device 925 is capable of transmitting and receiving signals or the like in accordance with a predetermined protocol, such as TCP/IP, for example, with the Internet or another communication device. Furthermore, the communication network 931 to be connected to the communication device 925 includes a network connected by wire or wirelessly, or the like, which may be, for example, the Internet, a home LAN, infrared communication, radio wave communication, satellite communication, or the like.

### <7. Supplementary Items>

As described above, although the preferred embodiments of the present disclosure have been described in detail with reference to the accompanying drawings, the technical scope of the present disclosure is not limited to such examples. It is apparent to those skilled in the art of the present disclosure that various alterations and modifications can be conceived within the scope of the technical idea described in the appended claims, and such alterations and modifications are also naturally within the technical scope of the present disclosure.

For example, the unit certification is performed by the server 300 in the example described above. However, the unit certification may be performed by the user device 100. The is, the user device 100 may have the functions of the acquisition unit 308, the analyzer 310, and the certification unit 312 of the server 300. Furthermore, the user device 100 may register data of the certified experience unit in the blockchain. That is, the user device 100 may have the function of the registration unit 314 of the server 300.

Furthermore, in the example described with reference to Fig. 9, the experience value is managed in association with the experience unit. However, the experience value may be managed in association with a topic. That is, the experience value in each topic may be managed as data of the experience unit. At this time, the chart described with reference to Fig. 11 may be replaced with a chart representing temporal changes in the experience value owned by the user in each topic. Furthermore, the chart described with reference to Fig. 13 may be replaced with a chart representing a relationship between the experience value owned by the user and the relevant organization in each topic.

Furthermore, in the examples described with reference to Figs. 11 to 13, the charts are created on the basis of the experience unit data. However, the table creation unit 316 may create a chart on the basis of data of the learning unit owned by the user. For example, the table creation unit 316 may create a chart on the basis of the learning unit data obtained by the acquisition unit 308 from the blockchain.

Furthermore, in the examples described above, the data of the learning unit and the experience unit are managed by the blockchain data. However, the data of the learning unit and the experience unit may be managed by a system other than the blockchain. For example, the data of the learning unit and the experience unit may be managed by a server group constructing a cloud system. Furthermore, the data of the learning unit and the experience unit may be managed by an existing P2P network.

Furthermore, the information processing according to the present embodiment may be executed by an information processing apparatus such as a tablet computer, a desktop computer, a PDA, and an in-vehicle device. In addition, the server 300 may not be connected to another device by wire, and may be a portable computer.

Furthermore, there may be provided a computer program that causes the processor 102 of the user device 100 and the processor 302 of the server 300 to operate as described above with reference to Fig. 7. Furthermore, a recording medium storing such a program may be provided.

### <8. Conclusion>

As described above, the information management system according to the present disclosure manages data of an experience unit certified on the basis of social experience or practical experience of the user. In this manner, the experience unit data is managed, whereby data of knowledge of the user based on social experience or practical experience is managed. Furthermore, data of the learning unit or the experience unit is held on the network without being tampered. Furthermore, a third party who wishes to use the information included in the blockchain can access the information included in the blockchain on the basis of predetermined authority.

Furthermore, in the information management system according to the present disclosure, experience of the user is visualized on the basis of the experience unit data. Accordingly, a third party can easily understand what type of experience at what type of institution or organization the user has experienced.

Note that the following configurations are also within the technical scope of the present disclosure.
(1) An information processing apparatus, including: a processor that certifies, on the basis of evaluation target data created by a user and a predetermined condition, a first unit indicating experience of the user.
(2) The information processing apparatus according to (1) described above, in which the predetermined condition is that there is relevance between a topic related to a second unit indicating a result of learning of the user and the evaluation target data.
(3) The information processing apparatus according to (1) or (2) described above, in which the predetermined condition is that the evaluation target data has novelty over data related to a second unit indicating a result of learning of the user and data previously created by the user.
(4) The information processing apparatus according to any one of (1) to (3) described above, in which the predetermined condition is that there is similarity between the evaluation target data and sample data satisfying predetermined criteria.
(5) The information processing apparatus according to any one of (1) to (4) described above, in which the processor gives the user an experience value related to the first unit on the basis of certification of the first unit.
(6) The information processing apparatus according to (5) described above, in which the experience value is set to decrease as time passes.
(7) The information processing apparatus according to (6) described above, in which the decrease in the experience value is set to correspond to a forgetting curve.
(8) The information processing apparatus according to any one of (1) to (7) described above, in which an electronic signature made by the user, and an electronic signature made by an organization related to the evaluation target data are attached to the evaluation target data.
(9) The information processing apparatus according to (8) described above, in which the predetermined condition is that the electronic signature made by the user, and the electronic signature made by the organization related to the evaluation target data are attached to the evaluation target data.
(10) The information processing apparatus according to any one of (1) to (9) described above, in which the processor registers data of the first unit in a P2P database.
(11) The information processing apparatus according to (10) described above, in which the P2P database is a blockchain.
(12) The information processing apparatus according to (10) or (11) described above, in which the data of the first unit includes any one of data of a topic related to the first unit, data of an experience value given on the basis of certification of the first unit, and data of an organization related to the first unit.
(13) The information processing apparatus according to (10) described above, in which the processor obtains the data of the first unit from the P2P database, and performs processing of visualizing content indicated by the data of the first unit.
(14) The information processing apparatus according to (13) described above, in which the processor obtains data of an experience value included in the data of the first unit, and performs processing of visualizing the experience value.
(15) The information processing apparatus according to (14) described above, in which the processor creates data of a chart indicating temporal changes in the experience value.
(16) The information processing apparatus according to (14) or (15) described above, in which the processor creates data of a chart indicating a relationship between the experience value and an organization related to the first unit.
(17) A method for processing information that causes a computer to certify, on the basis of evaluation target data created by a user and a predetermined condition, a first unit indicating experience of the user.

### REFERENCE SIGNS LIST

- 100: User device
- 102: Processor
- 104: Communication unit
- 106: Operation unit
- 108: Display
- 110: Storage
- 200: Network
- 300: Server
- 302: Processor
- 304: Communication unit
- 306: Storage
- 308: Acquisition unit
- 310: Analyzer
- 312: Certification unit
- 314: Registration unit
- 316: Table creation unit

## Claims

1. An information processing apparatus, comprising:
a processor that certifies, on a basis of evaluation target data created by a user and a predetermined condition, a first unit indicating experience of the user.

2. The information processing apparatus according to claim 1, wherein
the predetermined condition is that there is relevance between a topic related to a second unit indicating a result of learning of the user and the evaluation target data.

3. The information processing apparatus according to claim 1, wherein
the predetermined condition is that the evaluation target data has novelty over data related to a second unit indicating a result of learning of the user and data previously created by the user.

4. The information processing apparatus according to claim 1, wherein
the predetermined condition is that there is similarity between the evaluation target data and sample data satisfying a predetermined criterion.

5. The information processing apparatus according to claim 1, wherein
the processor gives the user an experience value related to the first unit on a basis of certification of the first unit.

6. The information processing apparatus according to claim 5, wherein
the experience value is set to decrease as time passes.

7. The information processing apparatus according to claim 6, wherein
the decrease in the experience value is set to correspond to a forgetting curve.

8. The information processing apparatus according to claim 1, wherein
an electronic signature made by the user, and an electronic signature made by an organization related to the evaluation target data are attached to the evaluation target data.

9. The information processing apparatus according to claim 8, wherein
the predetermined condition is that the electronic signature made by the user, and the electronic signature made by the organization related to the evaluation target data are attached to the evaluation target data.

10. The information processing apparatus according to claim 1, wherein
the processor registers data of the first unit in a P2P database.

11. The information processing apparatus according to claim 10, wherein
the P2P database is a blockchain.

12. The information processing apparatus according to claim 10, wherein
the data of the first unit includes any one of data of a topic related to the first unit, data of an experience value given on a basis of certification of the first unit, and data of an organization related to the first unit.

13. The information processing apparatus according to claim 10, wherein
the processor obtains the data of the first unit from the P2P database, and performs processing of visualizing content indicated by the data of the first unit.

14. The information processing apparatus according to claim 13, wherein
the processor obtains data of an experience value included in the data of the first unit, and performs processing of visualizing the experience value.

15. The information processing apparatus according to claim 14, wherein
the processor creates data of a chart indicating a temporal change in the experience value.

16. The information processing apparatus according to claim 14, wherein
the processor creates data of a chart indicating a relationship between the experience value and an organization related to the first unit.

17. A method for processing information that causes a computer to perform:
certifying, on a basis of evaluation target data created by a user and a predetermined condition, a first unit indicating experience of the user.
